# EUROPEAN PATENT APPLICATION

(11) **EP 4 563 305 A1**
(43) Date of publication of application: **04.06.2025**
(21) Application number: 23844531.6
(22) Date of filing: 05.07.2023
(51) Int. Cl.: B25J 15/08, B25J 15/12

(54) **GRIPPING DEVICE**

(30) Priority: 27.07.2022 JP 2022119217
(71) Applicant: HITACHI HIGH-TECH CORPORATION, Tokyo 105-6409 (JP)
(72) Inventor: SHIRAIWA Hiroyuki, Tokyo 105-6409 (JP); ODA Takahiro, Tokyo 105-6409 (JP); ITAGAKI Yuto, Tokyo 105-6409 (JP)
(74) Representative: Strehl & Partner mbB
(86) International application number: PCT/JP2023/025005
(87) International publication number: WO 2024/024436

(57) **Abstract**

The purpose of the present disclosure is to, with respect to a gripping device that grips an object, provide utility that enables a gripping action and various tasks to be performed. A gripping device according to the present disclosure comprises a first member and a second member that extend from an arm part. The first member and the second member are configured so as to grip an object by sandwiching the object. The rigidity of the first member is greater than the rigidity of the second member.

## Description

### Technical Field

The present disclosure relates to a gripping device to grip an object.

### Background Art

Work automation by a robot is a useful method for improving work efficiency. Various types of work are performed by robots depending on automation objects. The structure of the robot also has various forms depending on the various types of work.

Patent Literature 1 describes a robot hand with a mechanism for moving at least one of finger parts, i.e., a first finger part and a second finger part, along an opposite direction of the first and second finger parts (see abstract).

### Citation List

### Patent Literature

Patent Literature 1: Japanese Unexamined Patent Application Publication No. 2019-202370

### Summary of Invention

### Technical Problem

The structure of a robot is desirably optimized according to work to be performed by the robot. On the other hand, if the structure of a robot is optimized for specific work, the robot becomes less versatile, making it difficult to automate work other than the specific work. A robot like that in Patent Literature 1 is usually optimized for the work to be performed thereby, and is thus less likely to perform various types of work.

An object of the present invention is therefore to allow a gripping device for gripping an object to perform various types of work in addition to gripping operation.

### Solution to Problem

A gripping device according to the disclosure includes a first member and a second member, each extending from an arm part, configured to grip an object between them, where the first member has higher rigidity than the second member.

### Advantageous Effects of Invention

The gripping device of the disclosure can provide versatility to allow various types of work to be performed in addition to gripping operation. Other problems, configurations, and advantageous effects will be clarified by the following description of some embodiments.

### Brief Description of Drawings

Fig. 1 is a side diagram showing a configuration of a gripping device 1 according to a first embodiment.
Fig. 2 Illustrates a process of gripping an object 2 by the gripping device 1.
Fig. 3 is an illustration of rigidity of a first member 13 and rigidity of a second member 14.
Fig. 4 shows an exemplary member connecting between the second member 14 and an arm part 12.
Fig. 5 is a side diagram showing a shape of a tip end portion of the first or second member 13 or 14.
Fig. 6 shows an exemplary operation that can be performed using a tapered part 131.
Fig. 7 shows an exemplary elastic body 701 to clamp the object 2.
Fig. 8 shows an exemplary operation that can be performed using a resin component 15.
Fig. 9 illustrates a distance between the arm part 12 and a point of force.
Fig. 10 is a side view showing an exemplary configuration of a gripping device 1 according to a fourth embodiment.
Fig. 11 shows an exemplary configuration to reduce rigidity of the second member 14.
Fig. 12 shows another exemplary configuration to reduce the rigidity of the second member 14.
Fig. 13 shows an exemplary operation to grip an object 2 having a recess.
Fig. 14 shows an exemplary configuration with a strain sensor 1401 attached.
Fig. 15 shows an example where an elastic body 162 is disposed between the second member 14 and the arm part 12.
Fig. 16 shows a modification of the elastic body 162.
Fig. 17 shows another modification of the elastic body 162.
Fig. 18 shows a modification of a recess 132.

### Description of Embodiments

### First Embodiment

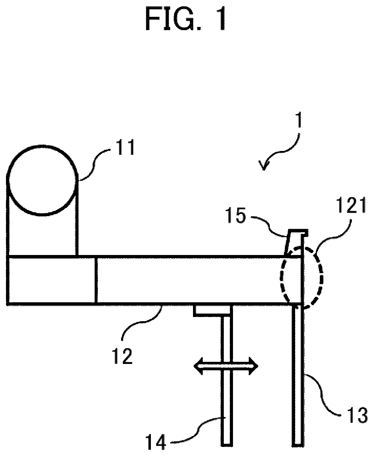

Fig. 1 is a side diagram showing a configuration of a gripping device 1 according to a first embodiment of the disclosure. The gripping device 1 grips an object. The gripping device 1 (robot) includes a main body 11, an arm part 12, a first member 13, a second member 14, and a resin component 15.

The main body 11 is a main body part of the gripping device 1. The arm part 12, which extends from the main body 11, can perform various motions (e.g., rotary motion) by the main body 11, for example. The first member 13 is attached to a first region 121, which is the tip end of the arm part 12, and extends approximately perpendicular to an extending direction of the arm part 12 (at least in a direction nonparallel to the extending direction of the arm part 12). The second member 14 is attached to the arm part 12 at a slight distance from the first member 13, and extends in substantially the same direction as the first member 13 (at least in a direction nonparallel to the extending direction of the arm part 12).

The first member 13 is fixed in position with respect to the arm part 12. The second member 14 can move along the extending direction of the arm part 12. The first member 13 has higher rigidity than the second member 14. For example, the first member 13 can be made of steel use stainless (SUS) and the second member 14 can be made of aluminum, but the materials are not necessarily limited to those.

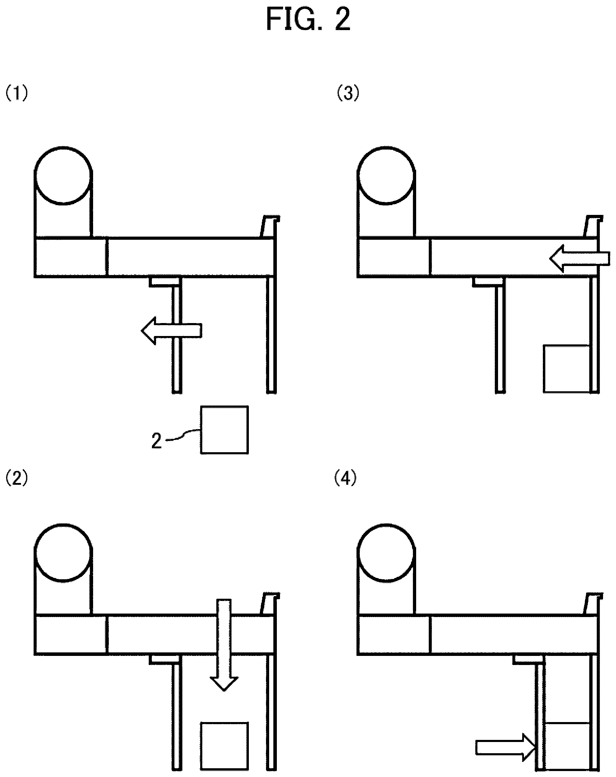

Fig. 2 Illustrates a process of gripping the object 2 by the gripping device 1. In an initial state, the arm part 12 is disposed above the object 2. The gripping device 1 moves the second member 14 in a direction away from the first member 13 (Fig. 2(1)). The gripping device 1 moves the arm part 12 downward (closer to the object 2) (Fig. 2(2)). The gripping device 1 moves the arm part 12 to bring a side surface of the first member 13 into contact with a side surface of the object 2 (Fig. 2(3)). The gripping device 1 moves the second member 14 in a direction closer to the first member 13 (Fig. 2(4)). Through such operations, the first member 13 and the second member 14 clamp the object 2, allowing the object 2 to be gripped.

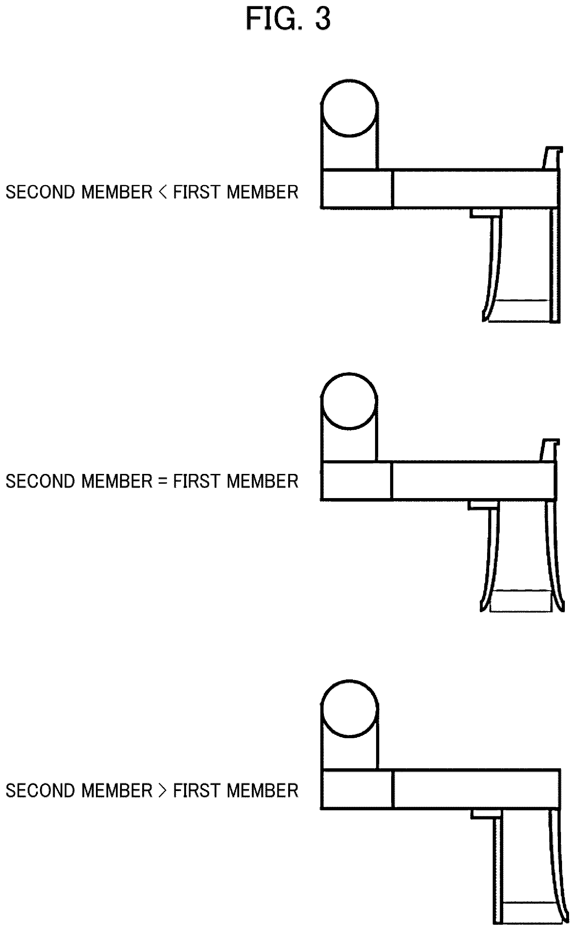

Fig. 3 is an illustration of rigidity of each of the first and second members 13 and 14. If the first member 13 has higher rigidity (upper side of Fig. 3), since the second member 14 bends when the first member 13 and the second member 14 grip the object 2, the object 2 is gripped with the first member 13 as a reference position that is unchanged. As a result, the gripping device 1 has high operation reproducibility. If both have the same rigidity (middle side of Fig. 3), since both the first member 13 and the second member 14 bend when the object 2 is gripped, the reference position for gripping changes from the first region 121, and thus operational reproducibility of the gripping device 1 is lower than that in the upper side of Fig. 3. If the second member 14 has higher rigidity (lower side of Fig. 3), since the first member 13 bends when the object 2 is gripped, the reference position for gripping changes from the first region 121, and thus operational reproducibility of the gripping device 1 is lower than that in the upper side of Fig. 3. Therefore, when the first region 121 (i.e., the first member 13) is set as the reference position, the first member 13 desirably has higher rigidity than the second member 14.

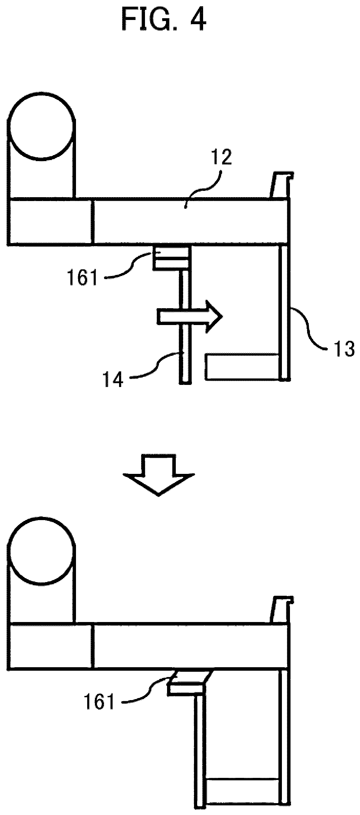

Fig. 4 shows an exemplary member connecting between the second member 14 and the arm part 12. Connection can be made between the second member 14 and the arm part 12 by an elastic body 161. In other words, the second member 14 in Fig. 4 has the elastic body 161. The second member 14 has an L shape, and the elastic body 161 extends along the arm part 12 in a direction opposite to the direction toward the first member 13. When the second member 14 is moved toward the first member 13 (the upper surface of the elastic body 161 is slid toward the first member 13), the elastic body 161 is deformed as shown in the lower side of Fig. 4. As a result, the reference position of the gripping operation does not change from the first region 121.

In the configuration of Fig. 4, the second member 14 excluding the elastic body 161 may have approximately the same rigidity as the first member 13. This is because since the elastic body 161 of the second member 14 has lower rigidity than the first member 13, when clamping the object 2, the second member 14 as a whole has lower rigidity than the first member 13.

### First Embodiment: Summary

The gripping device 1 according to the first embodiment has the first member 13 and the second member 14 extending from the arm part 12, and is configured to be capable of gripping the object 2 by the first member 13 and the second member 14, where the first member 13 has higher rigidity than the second member 14. This makes it possible to achieve reproducible gripping operation without changing the reference position of the gripping operation.

In the gripping device 1 of the first embodiment, the first member 13 and the second member 14 can take various postures by the arm part 12 and the main body 11 (a driving mechanism to change a posture of the arm part 12). This makes it possible to perform various types of operations by the tip end of the first member 13 (or the second member 14), for example. Specific operation examples will be described in the following embodiments, respectively.

### Second Embodiment

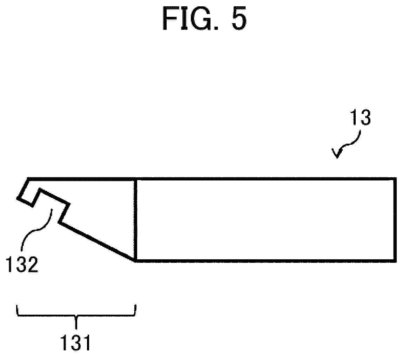

Fig. 5 is a side diagram showing a shape of a tip end portion of the first member 13 or the second member 14. At least one of the first and second members 13 and 14 may be configured to have the tip end portion as shown in Fig. 5. Although Fig. 5 exemplarily shows the tip end portion of the first member 13, the second member 14 may also have the same structure. Alternatively, only the second member 14 may have the same structure. Other configurations are the same as in the first embodiment.

The tip end portion of the first member 13 has a tapered part 131 with a tapered tip end. The inclined portion of the tapered part 131 further has a recess 132. The tapered part 131 can be made of, for example, a resin material. The tapered part 131 and the recess 132 can be used to perform the following operations. The same is true for the second member 14.

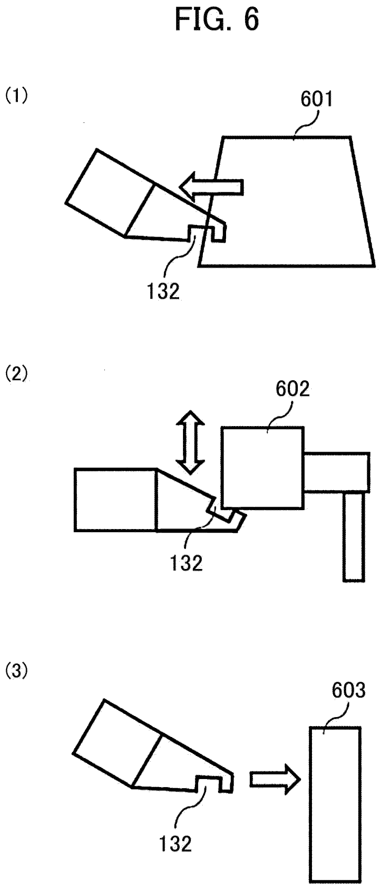

Fig. 6 shows an exemplary operation that can be performed using the tapered part 131. The gripping device 1 can perform various operations using the tapered part 131. Fig. 6 shows some examples of such operations.

Fig. 6(1): When the gripping device 1 accesses an object housed in a drawer structure 601, the recess 132 is hooked onto a slit portion of the drawer structure 601, and the drawer structure 601 is pulled forward as it is. This makes it possible to access the object housed in the drawer structure 601. It is also possible to push the pulled object back to its original position by the tapered part 131.

Fig. 6(2): A jig 602 can be supported from below and raised and lowered by the tapered part 131. At this time, when the jig 602 is positioned so that part of the jig 602 fits into the recess 132, a position of the jig 602 is more desirably stabilized.

Fig. 6(3): A button can be pressed by the tapered part 131. Alternatively, the tapered part 131 can be pressed to a door 603, which opens and closes when pushed in, to open and close the door 603.

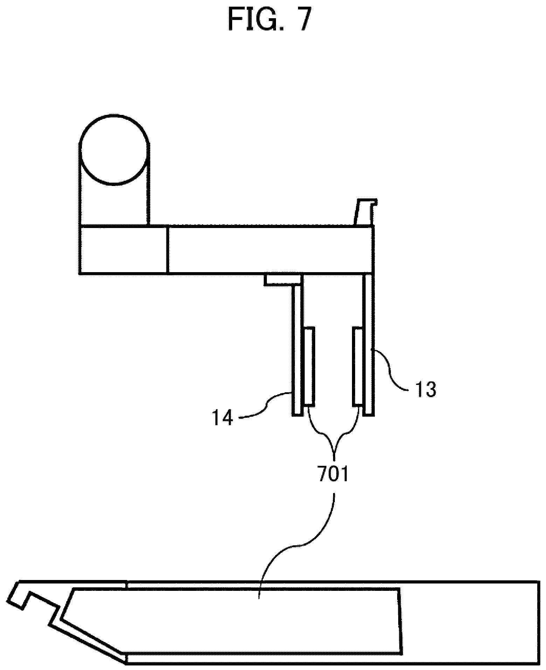

Fig. 7 shows an exemplary elastic body 701 to clamp the object 2. The upper side of Fig. 7 shows a side view of the gripping device 1, and the lower side thereof shows a side view of the first member 13 (or the second member 14). The elastic body 701 may be attached to the side surface, on a side on which the target object 2 is clamped, of at least one of the first and second members 13 and 14 (both in Fig. 7). The elastic body 701 acts as an anti-slip material when the object 2 is gripped. The elastic body 701 can be made of a material that exerts a certain degree of frictional force when the object 2 is gripped. The elastic body 701 is attached so as to include at least part of an area, in which the target object 2 is gripped, of the first member 13 (or the second member 14). Other configurations are the same as in the first embodiment.

If the object 2 is gripped without the elastic body 701 attached, insufficient force to clamp the object 2 leads to a body position at which the object 2 is clamped only at application points, and thus a posture of the object 2 may be unstable. Using a certain soft material for the elastic body 701 makes it possible to stably grip the object 2 because when the object 2 is gripped, the elastic body 701 becomes dented, which leads to gripping operation in a manner of wrapping around the object 2. Furthermore, a gripping state can be further stabilized by using a material, which acts a certain frictional force with respect to the object 2, for the elastic body 701.

### Third Embodiment

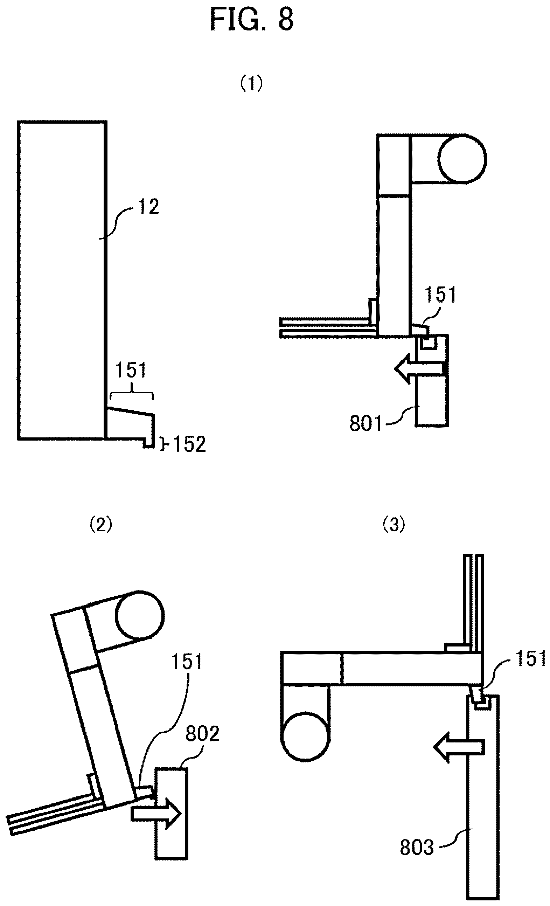

Fig. 8 shows an exemplary operation that can be performed using the resin component 15. The gripping device 1 can use the resin component 15 to perform various operations. Fig. 8 shows some examples of such operations. The resin component 15 has a first protrusion 151 protruding from the arm part 12. The first protrusion 151 protrudes from the arm part 12 in a direction opposite to the extending direction of the first member 13. The resin component 15 further has a second protrusion 152. The second protrusion 152 is disposed at the tip end of the first protrusion 151. The second protrusion 152 protrudes in a direction opposite to the direction from the first member 13 toward the second member 14. The first protrusion 151 and the second protrusion 152 allow operations exemplified below to be performed. The gripping device 1 has the same configuration as in the above embodiments.

Fig. 8(1): The door 801 can be opened by hooking the second protrusion 152 onto a groove (grip) of the door 801 and pulling the door 801.

Fig. 8(2): The door 802 can be closed by pushing the door 802 with the resin component 15. Although certain force is applied to the door 802 by the pushing operation, there is almost no risk of damaging the door 802 because the resin component 15 is made of a resin material.

Fig. 8(3): A drawer structure 803 can be pulled out by hooking the second protrusion 152 onto a groove (grip) of the drawer structure 803 and pulling the drawer structure 803.

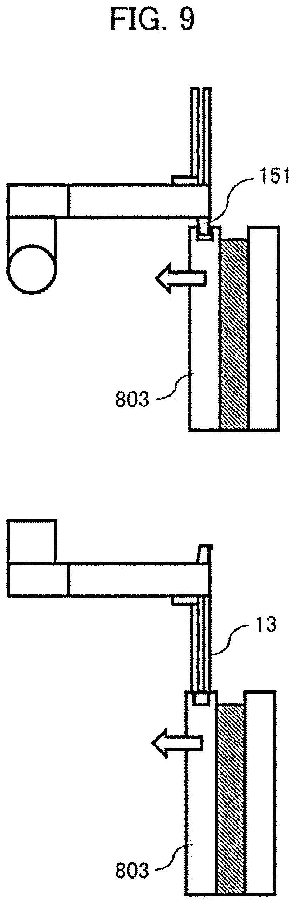

Fig. 9 illustrates a distance between the arm part 12 and a point of force. The figure shows an exemplary operation of pulling the drawer structure 803. When the drawer structure 803 is pulled with the resin component 15 (upper side of Fig. 9), a small moment acts on the gripping device 1 due to a short distance between the point of force and the arm part 12. As a result, an operation with a higher load can be performed. When the drawer structure 803 is pulled by the first member 13 (or second member 14) (lower side of Fig. 9), since the distance between the point of force and the arm part 12 is longer than that in the upper side of Fig. 9, a larger moment than that in the upper side of Fig. 9 acts on the gripping device 1. As a result, only an operation with a lower load can be performed. In view of the above, when an operation with a high load is performed, it will be desirable to perform the operation in the upper side of Fig. 9 (with the resin component 15).

### Fourth Embodiment

A fourth embodiment of the disclosure describes modifications of the respective parts of the gripping device 1. Since other configurations are the same as those in the above embodiments, differences from the above embodiments are mainly described below.

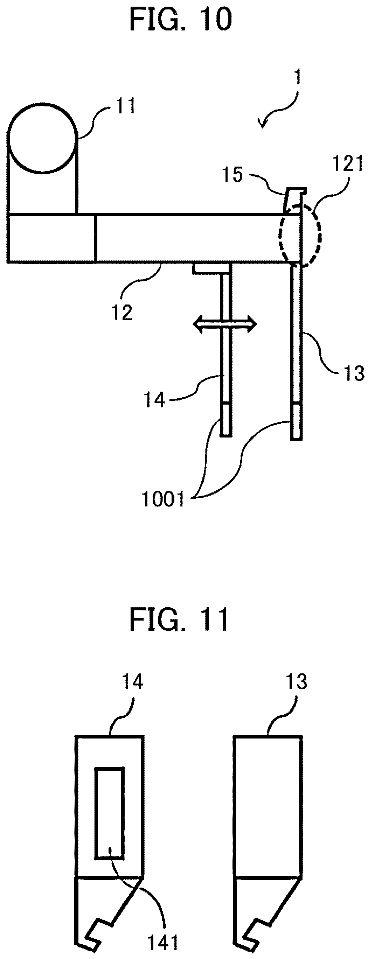

Fig. 10 is a side diagram showing an exemplary configuration of the gripping device 1 according to the fourth embodiment. At least one of the first and second members 13 and 14 may have a material 1001 such as silicone rubber attached to its tip end. The material 1001 makes it possible to operate a capacitive touch panel, for example. Alternatively, the material 1001 may be made of another rubber material and used as an anti-slip material to grip the object 2. In this case, the material 1001 can play the same role as the elastic body 701.

Fig. 11 shows an exemplary configuration to reduce rigidity of the second member 14. Part of the second member 14 may be formed as a hollow 141 to make the rigidity of the second member 14 lower than the rigidity of the first member 13. As a result, even if the first member 13 and the second member 14 are made of the same material, the second member 14 has a lower rigidity. This makes it possible to achieve the configuration described in the first embodiment. The hollow 141 does not necessarily have to penetrate the second member 14, and the same effect can also be achieved by denting part of the rectangular portion of the second member 14. Such a dent will also be referred to as the hollow 141.

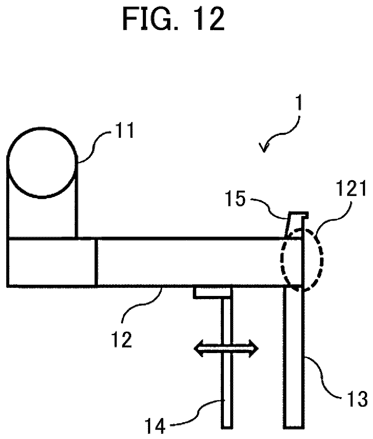

Fig. 12 shows another exemplary configuration to reduce the rigidity of the second member 14. Even if the first member 13 and the second member 14 are made of the same material, the second member 14 has lower rigidity by making the second member 14 thinner than the first member 13. This makes it possible to achieve the configuration described in the first embodiment.

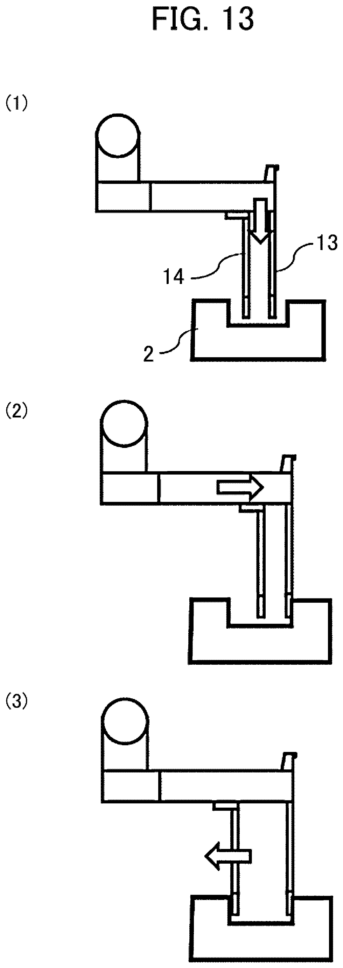

Fig. 13 shows an exemplary operation to grip an object 2 having a recess. The gripping device 1 moves the tip end of each of the first and second members 13 and14 to the same height position as the inner wall of the recess (Fig. 13(1)). The gripping device 1 moves the arm part 12 so as to press the first member 13 to one inner wall of the recess (Fig. 13 (2)). The gripping device 1 moves the second member 14 so as to press the second member 14 to the other inner wall of the recess (Fig. 13 (3)). As a result, the object 2 can be gripped from the inside of the recess.

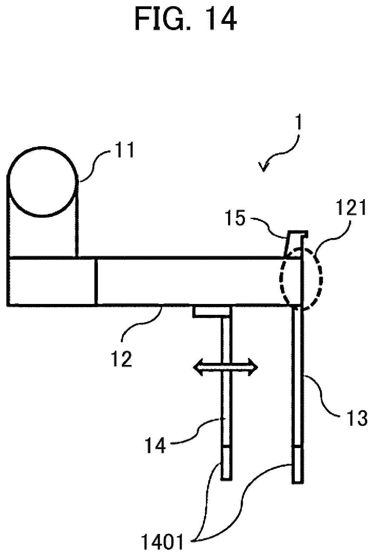

Fig. 14 shows an exemplary configuration with a strain sensor 1401 attached. In Fig. 14, the strain sensor 1401 is attached to at least one of the first and second members 13 and 14. Based on detection results of the strain sensor 1401, the gripping device 1 can detect a gripping state of the object 2 (e.g., whether the object 2 is being gripped, strength of gripping force, etc.). In the case of using a type of sensor, which detects strain of the second member 14 from a difference between strain of the first member 13 and the strain of the second member 14, the strain sensor 1401 is attached to each of the first and second members 13 and 14. In the case of using a type of sensor, which detects strain of the second member 14 alone, the strain sensor 1401 should be attached only to the second member 14.

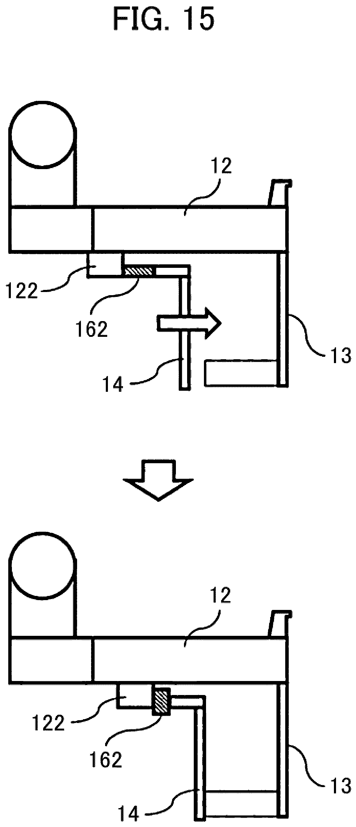

Fig. 15 shows an example where an elastic body 162 is disposed between the second member 14 and the arm part 12. Connection is made between the arm part 12 and the second member 14 via a region 122 protruding from the arm part 12 and the elastic body 162. In other words, the second member 14 includes the elastic body 162. The second member 14 is pressed to the object 2, so that the elastic body 162 becomes flattened (lower side of Fig. 15). This makes it possible to grip the object 2 without changing the reference position of the gripping operation.

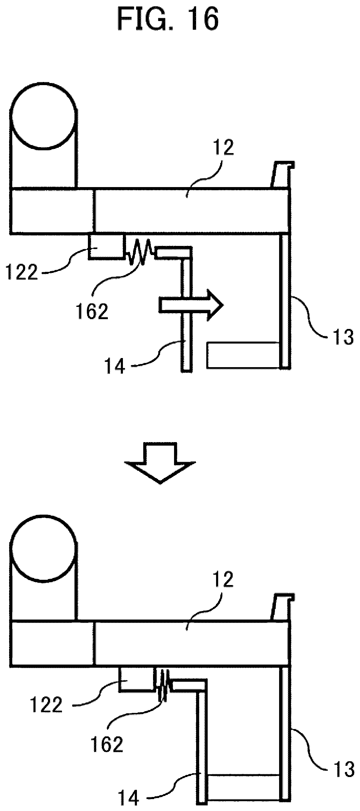

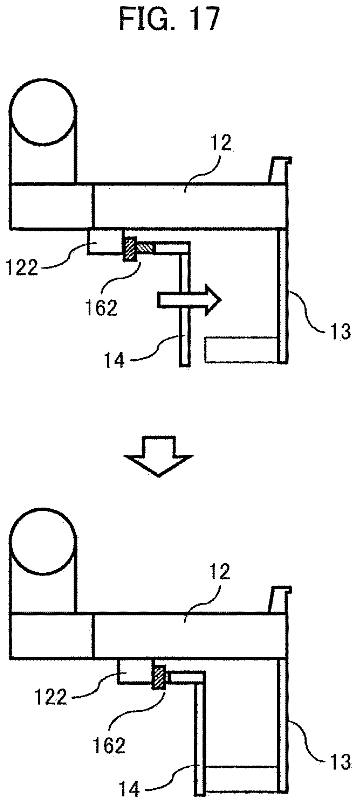

Figs. 16 and 17 show modifications of the elastic body 162. The elastic body 162 may be formed of a spring (Fig. 16) or a damper (Fig. 17). In either configuration, the same effect as that in Fig. 15 can be achieved.

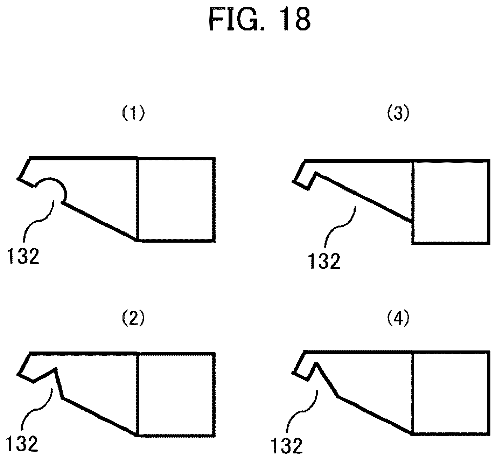

Fig. 18 shows a modification of the recess 132. Examples of a shape of the recess 132 include: a curved surface (Fig. 18(1)); a V-shaped notch (Fig. 18(2)); a depression opened to the root of the tapered part 131 (Fig. 18(3)); and a triangular notch formed by two sides with different lengths (Fig. 18(4)).

### Modifications of The Disclosure

The disclosure is not limited to the above embodiments, but includes various modifications. For example, the above embodiments have been described in detail to clearly explain the disclosure, and not all the described configurations are necessarily required to be included. Part of one embodiment can be replaced with a configuration of another embodiment. A configuration of one embodiment can be added to a configuration of another embodiment. For each embodiment, part of a configuration of one embodiment can be added to, deleted from, or replaced with part of a configuration of another embodiment.

In the above embodiments, each operation performed by the gripping device 1 can be implemented by, for example, storing data, which describes the amount of movement of each region for each operation step, in advance in a storage device, and instructing a combination of the operation steps. For example, it is only necessary to instruct the gripping device 1 to perform each of steps (1) to (4) in Fig. 2 in the order shown in Fig. 2 while data, which specify the amount of movement of each region in each of the steps, are stored in advance.

In the above embodiments, mechanisms such as an electric actuator, a pneumatic cylinder, and a hydraulic cylinder can each be used as a driving mechanism for sliding the second member 14 along the arm part 12.

Although the resin component 15 is described to be attached to the first region 121 at the tip end of the arm part 12 in the above embodiments, the front surface (the surface of the resin component 15 as viewed from the right side of Fig. 1) of the resin component 15 and the front surface (the surface of the arm part 12 as viewed from the right side of Fig. 1) of the arm part 12 do not necessarily have to be on the same plane. For example, the resin component 15 may be disposed at a position slightly away from the first region 121 toward the main body 11. In other words, the disposed position of the resin component 15 may be slightly changed within a range where operation performed by the resin component 15 is not hindered. A component similar to the resin component 15 may be added to the upper surface of the arm part 12 (the upper-side surface of the arm part 12 in Fig. 1) to perform the same operation as in each of the above embodiments. The material of the resin component 15 may be changed as long as each operation described in the above embodiments can be performed. For example, a rubber material may be used.

Although the first member 13 is described to be attached to the first region 121 in the above embodiments, the front surface of the first member 13 and the front surface of the arm part 12 do not necessarily have to be on the same plane, as with the resin component 15.

### List of Reference Signs

1: gripping device
11: main body
12: arm part
13: first member
14: second member
15: resin component

## Claims

1. A gripping device to grip an object, comprising:
an arm part;
a first member fixed to a first region at an end of the arm part, and extending in a direction nonparallel to an extending direction of the arm part with the first region as a start point; and
a second member disposed in parallel with the first member and movable along the arm part,
wherein the first member and the second member are configured to be capable of clamping and gripping the object, and
the first member and the second member are configured to respectively have rigidities, the rigidity of the first member being higher than the rigidity of the second member.

2. The gripping device according to claim 1,
wherein the second member has a first elastic body,
connection is made between the arm part and the second member through connection of the first elastic body and the arm part, and
the first elastic body extends in a direction opposite to a direction from the second member toward the first member, thereby the second member forms an L shape.

3. The gripping device according to claim 1,
wherein at least one of regions has a recess, the regions including
a second region being a tip end of the first member on a side where the first member is unconnected to the arm part,
and
a third region being a tip end of the second member on a side where the second member is unconnected to the arm part.

4. The gripping device according to claim 3,
wherein the first member and the second member are each a rectangular member extending from the arm part,
the second region and the third region are each a tapered region disposed at a tip end of the rectangular member, and
the recess is formed in the tapered region.

5. The gripping device according to claim 3,
wherein a second elastic body is attached to at least one of respective surfaces of the second region and the third region, the surfaces being opposed to each other.

6. The gripping device according to claim 1,
further comprising a first protrusion formed to protrude from the arm part in a direction opposite to the extending direction of the first member in the first region.

7. The gripping device according to claim 6,
wherein the first protrusion includes a second protrusion formed to protrude in a direction nonparallel to the direction in which the first protrusion protrudes from the arm part and in a direction opposite to a direction from the first member toward the second member.

8. The gripping device according to claim 6,
wherein length of the first protrusion protruding from the arm part is shorter than length of the first member or the second member protruding from the arm part.

9. The gripping device according to claim 3,
wherein at least one of the second and third regions is configured of an elastic body.

10. The gripping device according to claim 1,
wherein the first member and the second member are formed of the same material, and
the second member has a hollow portion or is thinner than the first member, thereby the first and second members are configured to respectively have rigidities, the rigidity of the first member being higher than the rigidity of the second member.

11. The gripping device according to claim 1,
further comprising a strain sensor that detects deflection of the second member and thus detects a gripping state of the object by the first member and the second member.

12. The gripping device according to claim 1,
wherein the second member has a second elastic body,
connection is made between the arm part and the second member through connection of a member protruding from the arm part and the second elastic body, and
the second elastic body is disposed to contract depending on strength of clamping when the first and second members grip the object by clamping the object.

13. The gripping device according to claim 3,
wherein the recess includes at least one of dents,
the dents including a curved dent, an isosceles triangular dent, a dent formed by two sides with different lengths of a triangle, and a rectangular dent.

14. The gripping device according to claim 4,
wherein the gripping device performs at least one of operations including:
pulling a drawer structure out by hooking the recess onto a slit of the drawer structure;
raising and lowering the arm part while supporting an object by the recess; and
pressing a button or opening and closing a door, the door opening and closing when pushed in, by the second or third region.

15. The gripping device according to claim 7,
wherein the gripping device performs at least one of operations including:
opening a door by hooking the second protrusion onto a grip of the door;
closing the door by pushing the door by the first or second protrusion; and
pulling a drawer structure out by hooking the second protrusion onto a slit of the drawer structure.

16. The gripping device according to claim 1,
wherein the object has a second recess, and
the gripping device
presses the first member to one of inner walls of the second recess, and
moves the second member in a direction away from the first member, thereby presses the second member to the other of the inner walls of the second recess,
thereby grips the object via the second recess.

17. The gripping device according to claim 1,
further comprising a driving mechanism to change a posture of the arm part, and
the driving mechanism is configured to be capable of changing a type of operation performed by the gripping device by changing the posture of the arm part.
